# EUROPÄISCHE PATENTANMELDUNG

(11) **EP 3 489 924 A1**
(43) Veröffentlichungstag der Anmeldung: **29.05.2019**
(21) Anmeldenummer: 18206938.5
(22) Anmeldetag: 19.11.2018
(51) Int. Cl.: G08C 17/02, H04Q 9/00

(54) **FUNK-KOMMUNIKATIONSSYSTEM FÜR FAHRZEUGANHÄNGER**

(30) Priorität: 24.11.2017 DE 202017107154 U
(71) Anmelder: Knott GmbH, D-83125 Eggstätt (DE); Reich GmbH Regel- und Sicherheitstechnik, 35713 Eschenburg-Wissenbach (DE)
(72) Erfinder: STRASSER, Josef, 83257 Gstadt am Chiemsee (DE); MERTINKO, Christian, 83349 Palling (DE); BENDER, Steffen, 35713 Eschenburg (DE); THEISS, Marc André, 35687 Dillenburg (DE)
(74) Vertreter: Flach Bauer Stahl Patentanwälte Partnerschaft mbB

(57) **Zusammenfassung**

Ein Funk-Kommunikationssystem für Fahrzeuganhänger zur Übertragung von Funksignalen umfasst einen im Bereich des Fahrzeuganhängers angeordneten RF-Funksender (28) zur Aussendung von RF-Funksignalen (32), die keine Bluetooth-Signale sind, und eine als Relaisstation dienende Relais-Signalübertragungseinheit (30) zum Konvertieren der RF-Funksignale (32) in Bluetooth-Signale (33), um diese an eine Anzeigeeinheit (31) weiterzuleiten.

## Beschreibung

Die Erfindung betrifft ein Funk-Kommunikationssystem zur drahtlosen Übertragung von im Bereich eines Fahrzeuganhängers auf der Basis von Sensorsignalen erzeugten Funksignalen an eine in einem Zugfahrzeug angeordnete oder anordenbare Anzeigeeinheit gemäß dem Oberbegriff des Patentanspruchs 1. Weiterhin betrifft die Erfindung ein Stabilisierungssystem, insbesondere Schlingerbremssystem, für Fahrzeuganhänger mit einem derartigen Funk-Kommunikationssystem, sowie einen Fahrzeuganhänger mit einem derartigen Funk-Kommunikationssystem bzw. mit einem derartigen Stabilisierungssystem.

Es ist bekannt, Fahrzeuganhänger wie beispielsweise Wohnwagen, Markt- oder Bootsanhänger etc. mit einer Stabilisierungseinrichtung auszustatten, um Schlingerbewegungen des Fahrzeuganhängers um seine Hoch-, Längs- und/oder Querachse zu vermeiden bzw. derartigen Schlingerbewegungen entgegenzuwirken. Derartige Stabilisierungseinrichtungen erfassen mittels geeigneter Sensoren eventuelle Schlingerbewegungen und leiten die Sensorsignale an eine elektronische Steuereinrichtung weiter, die einen auf die Radbremsen des Fahrzeuganhängers einwirkenden Aktor derart ansteuert, dass die Radbremsen des Fahrzeuganhängers in einer den Schlingerbewegungen entgegenwirkenden Weise gezielt betätigt werden. Dies kann beispielsweise durch beidseitiges Abbremsen des Fahrzeuganhängers und Strecken des Gespanns oder durch abwechselndes gegenphasiges Abbremsen der links- und rechtsseitigen Radbremsen erfolgen.

Um den Fahrer des Zugfahrzeugs über den Fahrzustand des Anhängers und den Zustand der Bremsanlage des Anhängers zur informieren, ist weiterhin aus der DE 20 2014 007 029 U1 ein Funk-Kommunikationssystem gemäß dem Oberbegriff des Anspruchs 1 bekannt, bei welchem ein im Bereich des Aktors vorgesehener Funksender ein akustisches, optisches oder elektrisches Signal abgibt, solange die Bremseinrichtung die Radbremsen des Fahrzeuganhängers betätigt. Diese Signale können dort zum Beispiel per Bluetooth auf ein Mobilfunkgerät oder einen im Zugfahrzeug fest eingebauten und dazu geeigneten Empfänger übertragen werden.

Nachteilig ist bei diesem bekannten Funk-Kommunikationssystem, dass diese Funkverbindung nur eine relativ kurze Reichweite hat und der Funksender so platziert werden muss, dass die Funksignale möglichst wenig behindert werden. Dies schränkt die Platzierungsmöglichkeiten für den Funksender ein. Weiterhin geben derzeit übliche Anzeigegeräte dem Fahrer nur in sehr begrenztem Umfang Informationen über den Fahr- und/oder Betriebszustand des Anhängers und über den Betriebszustand des Funk-Kommunikationssystems.

Der Erfindung liegt daher die Aufgabe zugrunde, ein Funk-Kommunikationssystem für Fahrzeuganhänger zu schaffen, das in der Lage ist, im Bereich des Fahrzeuganhängers erzeugte Funksignale auf besonders sichere und störungsfreie Weise an eine im Zugfahrzeug angeordnete oder anordenbare Anzeigeeinheit zu übertragen und den Fahrer über den Fahr- und/oder Betriebszustand des Fahrzeuganhängers und über den Betriebszustand des Funk-Kommunikationssystems zu informieren. Weiterhin soll ein Stabilisierungssystem für Fahrzeuganhänger mit einem derartigen Funk-Kommunikationssystem sowie ein Fahrzeuganhänger mit einem derartigen Funk-Kommunikationssystem oder einem derartige Stabilisierungssystem, geschaffen werden.

Diese Aufgabe wird erfindungsgemäß durch ein Funk-Kommunikationssystem gemäß Anspruch 1, ein Stabilisierungssystem gemäß Anspruch 10 sowie durch einen Fahrzeuganhänger gemäß den Ansprüchen 13 und 14 gelöst. Vorteilhafte Ausgestaltungen der Erfindung sind in den weiteren Ansprüchen beschrieben.

Das erfindungsgemäße Funk-Kommunikationssystem weist einen im Bereich des Fahrzeuganhängers angeordneten RF-Funksender zur Aussendung von RF-Funksignalen, die keine Bluetooth-Signale sind, und eine als Relaisstation dienende Relais-Signalübertragungseinheit auf, die ausgebildet ist, die RF-Funksignale des RF-Funksenders in Bluetooth-Signale zu konvertieren und über eine Bluetooth-Schnittstelle an die Anzeigeeinheit weiterzuleiten.

"RF" bedeutet hierbei "Radio Frequency", d.h. eine Frequenz insbesondere im MHz-Bereich. "Bluetooth" bedeutet eine Funkübertragung von Signalen bzw. Daten nach dem Bluetooth-Standard gemäß IEEE 802.15.* (* = z.B. 1,2, ...).

Das erfindungsgemäße Funk-Kommunikationssystem bietet den Vorteil, dass die vom RF-Funksender des Fahrzeuganhängers ausgesandten RF-Funksignale auf sehr zuverlässige und störungssichere Weise auch über größere Strecken auf die Relais-Signalübertragungseinheit übertragen werden können. Es ist daher ohne weiteres möglich, den RF-Funksender in einem größeren Abstand zum Zugfahrzeug anzuordnen, insbesondere in der Nähe der Achse des Fahrzeuganhängers. Die Platzierung ist hierbei relativ unkritisch. Die Relais-Signalübertragungseinheit kann dagegen innerhalb des Zugfahrzeugs, beispielsweise für den Fahrer sichtbar in der Nähe des Armaturenbretts angeordnet sein oder an anderen Stellen des Zugfahrzeugs, beispielsweise im Handschuhfach, verstaut werden. Alternativ kann die Relais-Signalübertragungseinheit auch am Fahrzeuganhänger, beispielsweise an der Deichsel in der Nähe der Anhängerkupplung, angeordnet sein. Die Anzeigeeinheit kann darüber hinaus derart beschaffen sein und über eine geeignete Software betrieben werden, dass dem Fahrer umfangreiche Informationen über Fahr- und/oder Betriebszustände des Fahrzeuganhängers und über den Betriebszustand des Funk-Kommunikationssystems auf optisch ansprechende Weise mitgeteilt werden können.

Vorteilhafterweise ist auch die Relais-Signalübertragungseinheit zur optischen und/oder akustischen Anzeige von Fahr- und/oder Betriebszuständen des Fahrzeuganhängers und/oder zur Anzeige des Betriebszustands des Funk-Kommunikationssystems ausgebildet. In diesem Fall können die Fahr- und/oder Betriebszustände des Fahrzeuganhängers nicht nur über diejenige Anzeigeeinheit, die über die Bluetooth-Verbindung betrieben wird, sondern auch über die dazwischen geschaltete Relais-Signalübertragungseinheit angezeigt werden. Hat der Fahrer keine Bluetooth-Anzeigeeinheit zur Verfügung, kann er auch mittels der Relaiseinheit über die Fahr- und/oder Betriebszustände des Fahrzeuganhängers informiert werden. Beispielsweise kann die Relaiseinheit derart ausgebildet sein, dass angezeigt wird, wenn keine Schlingerbewegungen detektiert werden, kritische Schlingerbewegungen detektiert werden, ein Bremseingriff stattfindet, das Zugfahrzeug über einen bestimmten Schwellwert bremst und die Auflaufbremseinrichtung aktiviert wird und/oder wenn ein Fehler im Stabilisierungssystem oder im Funk-Kommunikationssystem auftritt. Weiterhin kann die Relaiseinheit derart ausgebildet sein, dass der Einschaltzustand der Funk-Kommunikationssystem, Reifendruck, Reifentemperatur, Reifendrehzahl, Geschwindigkeit, Fahrtrichtung, Bremsbelagverschleiß, Ladungsverteilung, Achslast, Stützlast während der Fahrt und/oder die Stützlast während des Beladens des Fahrzeuganhängers angezeigt werden.

Vorzugsweise besteht die Relais-Signalübertragungseinheit aus einer mobilen Relaiseinheit. In diesem Fall kann die Relaiseinheit variabel an beliebigen Stellen des Zugfahrzeugs untergebracht werden. Alternativ hierzu ist es jedoch auch ohne weiteres möglich, eine stationär im Zugfahrzeug angeordnete Relaiseinheit zu verwenden. Gemäß einer bevorzugten Ausführungsform sind der RF-Funksender und die Relais-Signalübertragungseinheit zum Senden bzw. Empfangen von RF-Funksignalen im Bereich zwischen 300 MHZ und 1000 MHz, insbesondere 433 MHz oder 866 MHz, ausgebildet.

Vorzugsweise ist die Bluetooth-Schnittstelle eine Bluetooth-Low-Energy (BLE) Schnittstelle.

Gemäß einer besonders vorteilhaften Ausführungsform ist die über Bluetooth betreibbare Anzeigeeinheit eine mobile Anzeigeeinheit in Form eines Smartphones, Tablets oder Navigationsgeräts oder eine in einem Zugfahrzeug fest installierte Anzeigeeinrichtung. Insbesondere Smartphones oder Tablets eignen sich in besonderer Weise dazu, mittels einer geeigneten Anwendersoftware (App) die von der Relais-Signalübertragungseinheit mittels der Bluetooth-Verbindung übertragenen Informationen bzw. Daten in übersichtlicher Weise anzuzeigen und mit der Stabilisierungseinrichtung des Fahrzeuganhängers über die Relais-Signalübertragungseinheit in der gewünschten Weise zu kommunizieren. Eine in einem Zugfahrzeug fest installierte Anzeigeeinrichtung kann beispielsweise ein Head-Up-Display oder anderes Display des Zugfahrzeugs sein.

Die erfindungsgemäße Aufgabe wird weiterhin durch ein Stabilisierungssystem, insbesondere Schlingerbremssystem, für Fahrzeuganhänger gemäß Anspruch 8 gelöst. Ein derartiges Stabilisierungssystem weist eine Sensoreinrichtung zur Erfassung von kritischen Fahrzuständen des Fahrzeuganhängers und Abgabe entsprechender Sensorsignale, einen Aktor zur Betätigung der Radbremsen des Fahrzeuganhängers sowie eine elektronische Steuereinrichtung zur Ansteuerung des Aktors mittels Steuersignalen, die in Abhängigkeit der Sensorsignale erzeugt werden, auf. Die Stabilisierungseinrichtung weist dabei ein Funk-Kommunikationssystem der vorstehend beschriebenen Art auf.

Bei einem derartigen Stabilisierungssystem ergeben sich die gleichen Vorteile wie vorstehend im Zusammenhang mit dem Funk-Kommunikationssystem beschrieben.

Besonders vorteilhaft ist es dabei, wenn die Stabilisierungseinrichtung als kompakte Zentraleinheit ausgebildet ist, die den Aktor und die Steuereinrichtung umfasst, wobei der RF-Funksender innerhalb oder an der Zentraleinheit angeordnet ist. Hierdurch erübrigen sich Verkabelungen zwischen der Zentraleinheit und einem außerhalb der Zentraleinheit angeordneten RF-Funksender. Weiterhin muss kein separater RF-Funksender außerhalb der Zentraleinheit des Fahrzeuganhängers angeordnet werden, so dass der damit verbundene Montageaufwand entfällt und eine Beschädigungsgefahr eines externen RF-Funksenders ausgeschlossen wird.

Vorteilhafterweise ist die Sensoreinrichtung dazu ausgebildet, den Reifendruck, die Temperatur, die Reifendrehzahl, Fahrtrichtung, den Bremsbelagverschleiß, die Ladungsverteilung, Achslast, Stützlast während der Fahrt, die Stützlast während des Beladens des Fahrzeuganhängers, die Geschwindigkeit, Beschleunigung und/oder Gierrate des Fahrzeuganhängers zu erfassen und an die Steuereinrichtung oder den RF-Funksender weiterzuleiten. Auf diese Weise kann der Fahrer umfassend über die Fahr- und/oder Betriebszustände des Fahrzeuganhängers informiert werden.

Weiterhin wird die erfindungsgemäße Aufgabe durch einen Fahrzeuganhänger gemäß den Ansprüchen 13 und 14 gelöst.

Die Erfindung wird nachfolgend anhand der Zeichnungen beispielshaft näher erläutert. Es zeigen:
- Figur 1:: eine Seitenansicht eines Chassis eines Fahrzeuganhängers mit einem erfindungsgemäßen Stabilisierungssystem;
- Figur 2:: eine Draufsicht auf das Chassis von Figur 1;
- Figur 3:: eine Ansicht schräg von unten auf die Stabilisierungseinrichtung des Stabilisierungssystems;
- Figur 4:: eine Ansicht von unten auf die in Figur 3 gezeigten Teile;
- Figur 5:: eine Draufsicht auf ein Gespann mit einem Zugfahrzeug und einem Anhängerchassis, wobei Teile des erfindungsgemäßen Funk-Kommunikationssystems schematisch dargestellt sind; und
- Figur 6:: eine schematische Darstellung des erfindungsgemäßen Funk-Kommunikationssystems mit einer in Seitenansicht dargestellten Stabilisierungseinrichtung, einer Relais-Signalübertragungseinheit und einer Anzeigeinheit.

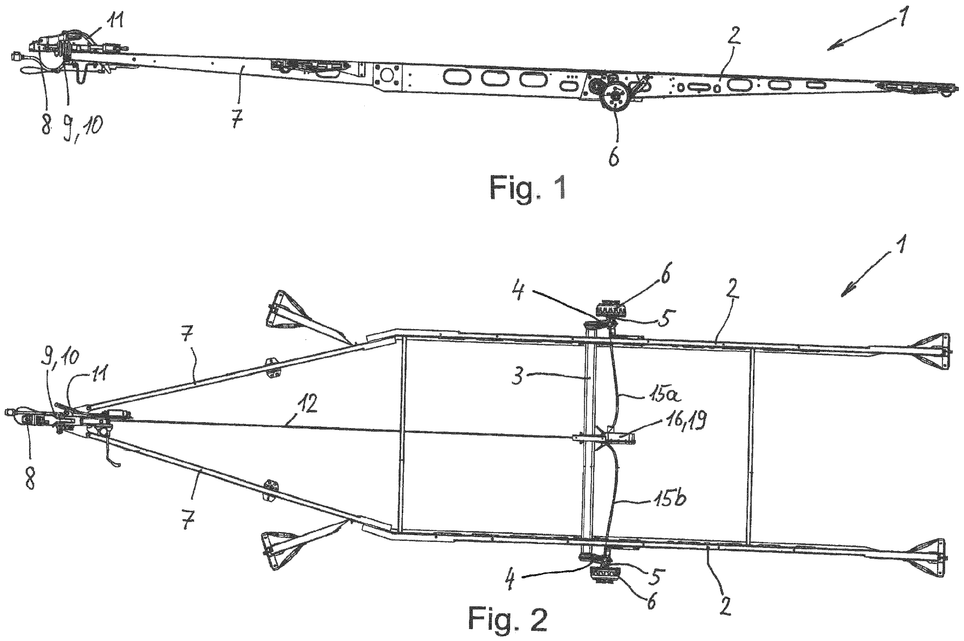

In den Figuren 1 und 2 ist ein Chassis 1 für einen auflaufgebremsten Fahrzeuganhänger, beispielsweise einen Wohnwagenanhänger, gezeigt. Das Chassis 1 umfasst zwei seitliche Längsträger 2, die von einem quer verlaufenden Achsrohr 3 durchsetzt sind. An Schwinghebeln 4 befestigte Achsstummel 5 dienen in bekannter Weise zur Lagerung von Radbremsen 6.

Von den Längsträgern 2 erstrecken sich Zugholme 7 zum vorderen Endbereich des Fahrzeuganhängers, wo sich eine Zugkugelkupplung 8, eine Auflaufbremseinrichtung 9 einer Auflaufbremsanlage 10 und ein Handbremshebel 11 einer Feststellbremse befinden.

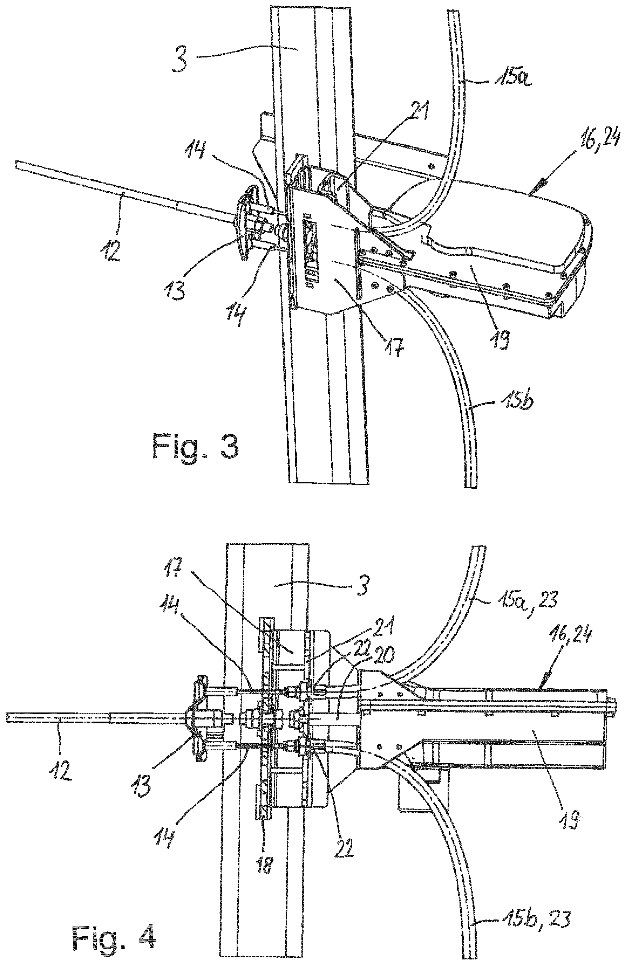

Die von der Auflaufbremseinrichtung 9 und dem Handbremshebel 11 erzeugte Bremskraft wird über eine mechanische Bremskraftübertragungseinrichtung auf die Radbremsen 6 übertragen. Diese mechanische Bremskraftübertragungseinrichtung umfasst ein zentrales Bremsgestänge 12, das an seinem vorderen Ende mit einem nicht näher dargestellten Übersetzungshebel der Auflaufbremsanlage 10 und mit seinem hinteren Ende mit einer Ausgleichswaage 13 verbunden ist, die in den Figuren 3 und 4 näher dargestellt ist. An den beiden gegenüberliegenden Endbereichen der Ausgleichwaage 13 sind Seilzüge 14 von zwei Bowdenzügen 15a, 15b befestigt, die seitlich nach außen zu den Radbremsen 6 geführt sind. Die Seilzüge 14 sind in bekannter Weise mit den Radbremsen 6 derart verbunden, dass durch Ziehen an der Seilzügen 14 die Radbremsen 6 betätigt werden.

Zur Reduzierung von Schlingerbewegungen des Fahrzeuganhängers ist ein Stabilisierungssystem in Form eines Schlingerbremssystems vorgesehen, das eine insbesondere in den Figuren 3, 4 und 6 näher dargestellte Stabilisierungseinrichtung 16 umfasst. Die Stabilisierungseinrichtung 16 ist als eine kompakte Zentraleinheit 24 ausgebildet und mittels einer Befestigungskonsole 17 an einer Lochplatte 18 des Achsrohrs 3 befestigt, insbesondere festgeschraubt.

Die Stabilisierungseinrichtung 16 umfasst einen Aktor 19 mit einem Elektromotor, der über Getriebeelemente auf eine Zugstange 20 (Figur 4) einwirkt, um diese im Fall von Schlingerbewegungen nach hinten, d.h. in Figur 4 nach rechts, zu ziehen. Das vordere Ende der Zugstange 20 ist mit einem verschiebbaren Seilhüllenwiderlager 21 fest verbunden, an dem die Enden 22 der Seilzughüllen 23 der Bowdenzüge 15a, 15b festgelegt sind.

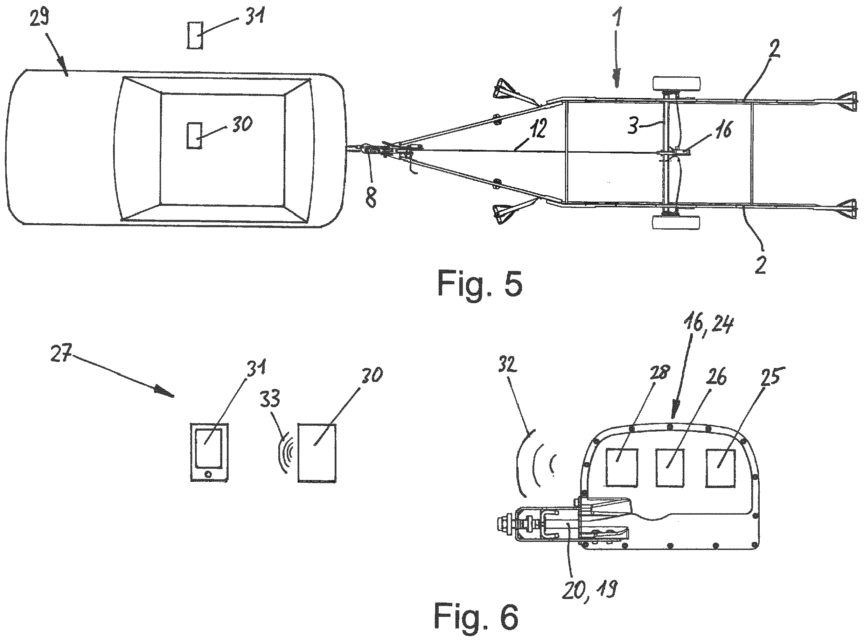

Das Stabilisierungseinrichtung 16 umfasst weiterhin eine in Figur 6 schematisch dargestellte Sensoreinrichtung 25 mit einem Schlingerbewegungssensor, der ebenfalls in der Zentraleinheit 24 angeordnet sein kann und im Fall einer Schlingerbewegung des Fahrzeuganhängers entsprechende Schlingerbewegungssignale erzeugt. Bei einem derartigen Schlingerbewegungssensor kann es sich beispielsweise um einen Querbeschleunigungssensor oder um einen Giersensor handeln.

Eine ebenfalls in der Zentraleinheit 24 angeordnete Steuereinrichtung 26 verarbeitet die vom Schlingerbewegungssensor erhaltenen Schlingerbewegungssignale und erzeugt daraus entsprechende Steuersignale für den Aktor 19. Der Aktor 19 betätigt dann die mechanische Bremskraftübertragungseinrichtung in Abhängigkeit der Steuersignale. Dies erfolgt dadurch, dass der Aktor 19 beim Auftreten von Schlingerbewegungen die Zugstange 20 und damit über das Seilhüllenwiderlager 21 auch die Enden 22 der Seilzughüllen 23 nach hinten zieht, wodurch die Radbremsen 6 zuggespannt werden. Die hierdurch bewirkte Bremsung des Fahrzeuganhängers bewirkt eine Streckung des Gespanns und reduziert die Schlingerbewegungen des Fahrzeuganhängers.

Es ist ohne weiteres möglich, dass außen dem Schlingerbewegungssensor weitere Sensoren am Fahrzeuganhänger angeordnet sind, welche Fahr- und/oder Betriebszustände des Fahrzeuganhängers erfassen und entsprechende Sensorsignale an die Steuereinrichtung 26 zur Weiterverarbeitung abgeben. Beispielsweise ist es möglich, dass die Sensoreinrichtung 25 Sensoren umfasst, die den Reifendruck, die Temperatur, den Reifendrehzahl, Fahrtrichtung, den Bremsbelagverschleiß, die Ladungsverteilung, die Achslast, Stützlast während der Fahrt und/oder Stützlast während des Beladens des Fahrzeuganhängers anzeigen. Weiterhin ist es möglich, dass einige oder alle Sensoren nicht innerhalb der Zentraleinheit 24, sondern außerhalb an geeigneten Stellen des Fahrzeuganhängers befestigt sind.

Um den Fahrer über Fahr- und/oder Betriebszustände des Fahrzeuganhängers, die von der Sensoreinrichtung 25 erfasst werden, sowie über die Betriebsbereitschaft und einen eventuellen Ausfall der Stabilisierungseinrichtung 16 zu informieren, ist ferner ein Funk-Kommunikationssystem 27 vorgesehen, das schematisch in den Figuren 5 und 6 dargestellt ist.

Das Funk-Kommunikationssystem 27 umfasst einen im Bereich des Fahrzeuganhängers angeordneten RF-Funksender 28 und eine vorzugsweise im Zugfahrzeug 29 (Figur 5) angeordnete oder anordenbare Relais-Signalübertragungseinheit 30, die derart ausgebildet ist, dass sie als Relaisstation zur Weiterleitung von Funksignalen an eine Anzeigeeinheit 31 dienen kann.

Der RF-Funksender 28 ist vorzugsweise, wie in Figur 6 dargestellt, innerhalb oder am Gehäuse der Zentraleinheit 24 angeordnet. Weiterhin ist der RF-Funksender 28 derart ausgebildet, dass er Signale, die er von der Steuereinrichtung 26 und/oder der Sensoreinrichtung 25 empfängt, in Form von RF-Funksignalen 32 aussendet, die vorzugsweise im Bereich zwischen 300 MHz und 1000 MHz, insbesondere bei 433 MHz oder 866 MHz, liegen. Bei diesen RF-Funksignalen 32 handelt es sich um Funksignale, die keine Bluetooth-Signale sind.

Die vom RF-Funksender 28 gesendeten RF-Funksignale 32 werden von der Relais-Signalübertragungseinheit 30 empfangen. Diese Relais-Signalübertragungseinheit 30 ist derart ausgebildet, dass sie die empfangenen RF-Funksignale 32 in Bluetooth-Signale 33 konvertiert, um diese Bluetooth-Signale 33 nach einer entsprechenden Synchronisation mit der Anzeigeeinheit 31 drahtlos an die Anzeigeeinheit 31 weiterzuleiten.

Die Relais-Signalübertragungseinheit 30 besteht vorteilhafterweise aus einer mobilen Relaiseinheit, die zur optischen und/oder akustischen Anzeige von Fahr- und/oder Betriebszuständen des Fahrzeuganhängers und/oder zur Anzeige des Betriebszustands der Stabilisierungseinrichtung und des Funk-Kommunikationssystems ausgebildet ist. Hierzu kann die Relais-Signalübertragungseinheit 30 Anzeigemittel in der Form von LEDs oder auch ein Display aufweisen, das die entsprechenden Informationen anzeigt. Die Ausbildung der Relais-Signalübertragungseinheit 30 als mobile Relaiseinheit hat den Vorteil, dass sie an beliebiger Stelle innerhalb des Zugfahrzeugs 29 deponiert werden kann. Insbesondere ist es auch möglich, die Relais-Signalübertragungseinheit 30 verborgen, beispielsweise im Handschuhfach, in der Mittelkonsole oder an anderen Stellen optisch unauffällig zu deponieren, falls die Anzeige der Relais-Signalübertragungseinheit 30 vom Fahrer nicht benutzt wird und anstelle dessen die Anzeigeeinheit 31 zur Informationsübermittlung verwendet wird.

Vorzugsweise ist die Relais-Signalübertragungseinheit 30 derart ausgebildet, dass sie folgende Fahr- und Betriebszustände des Fahrzeuganhängers anzeigen kann:
- es wird keine Bewegung detektiert,
- es wird eine kritische Fahrsituation, insbesondere eine kritische Schlinger- oder Pendelbewegung des Fahrzeuganhängers gemessen,
- es findet ein Bremseingriff statt,
- das Zugfahrzeug bremst über einem Schwellwert,
- es wird die Position des Bremsgestänges angezeigt,
- es wird ein Fehler des Funk-Kommunikationssystems 27 und/oder der Stabilisierungseinrichtung 16 angezeigt.

Die Relais-Signalübertragungseinheit 30 ist damit als Fernanzeige und als Empfänger in einem MHz-Bereich, insbesondere als 433 MHz- oder 866 MHz-Empfänger, ausgebildet, der die vom RF-Funksender 28 der Stabilisierungseinrichtung 16 gesendeten Signale bzw. Daten dekodiert, auswertet und mittels Anzeigemittel, beispielsweise mittels LEDs, anzeigt, sowie sämtliche Signale bzw. Daten über eine Bluetooth-Schnittstelle, insbesondere eine Bluetooth Low Energy (BLE) Funkschnittstelle, bereitstellt. Diese Fernanzeige kann als reines Anzeigegerät benutzt werden, wenn sich dieses im Sichtfeld des Fahrers befindet, oder fungiert als Schnittstelle (gateway) zwischen dem RF-Funksender 28 und der über eine Bluetooth-Verbindung betreibbaren Anzeigeeinheit 31.

Die Relais-Signalübertragungseinheit 30 weist darüber hinaus Bedienungselemente auf, mit denen die Relais-Signalübertragungseinheit 30 ein- oder ausgeschalten sowie mit der Stabilisierungseinrichtung 16 und mit der Anzeigeeinheit 31 verbunden werden kann.

Bei der Anzeigeeinheit 31 kann es sich um ein mobiles Anzeigegerät, insbesondere um ein Smartphone, Tablet oder ein mobiles Navigationsgerät, oder um eine fest im Zugfahrzeug 29 installierte Anzeigeeinrichtung, insbesondere um ein Headup-Display oder ein anderes Display des Zugfahrzeugs 29 handeln. Die Anzeigeeinheit 31 empfängt über die Bluetooth-Verbindung, d.h. über eine kurzreichweitige Punkt-zu-Punkt-Verbindung mit optionaler Verschlüsselung und Gerätepaarung, die von der Relais-Signalübertragungseinheit 30 übertragenen Signale bzw. Daten und zeigt diese vorzugsweise über eine geeignete Anwendersoftware (App) an. Dies bietet den besonderen Vorteil, dass die Darstellung und der Inhalt der angezeigten Daten durch eine entsprechende Anpassung der Software jederzeit geändert und aktualisiert werden kann.

Über das erfindungsgemäße Funk-Kommunikationssystem 27 können daher die anzuzeigenden Signale und Informationen auf sehr sichere und drahtlose Weise vom Fahrzeuganhänger in das Zugfahrzeug 29 übertragen und dort sowohl über die Relais-Signalübertragungseinheit 30 als auch über eine weitere, Bluetooth-betriebene Anzeigeeinheit 31 angezeigt werden.

## Patentansprüche

1. Funk-Kommunikationssystem zur drahtlosen Übertragung von im Bereich eines Fahrzeuganhängers auf der Basis von Sensorsignalen erzeugten Funksignalen an eine in einem Zugfahrzeug (29) angeordnete oder anordenbare Anzeigeeinheit (31), **dadurch gekennzeichnet, dass** das Funk-Kommunikationssystem (27) einen im Bereich des Fahrzeuganhängers angeordneten RF-Funksender (28) zur Aussendung von RF-Funksignalen (32), die keine Bluetooth-Signale sind, und eine als Relaisstation dienende Relais-Signalübertragungseinheit (30) aufweist, die ausgebildet ist, die RF-Funksignale (32) des RF-Funksenders (28) in Bluetooth-Signale (33) zu konvertieren und über eine Bluetooth-Schnittstelle an die Anzeigeeinheit (31) weiterzuleiten.

2. Funk-Kommunikationssystem nach Anspruch 1, **dadurch gekennzeichnet, dass** die Relais-Signalübertragungseinheit (30) zur optischen und/oder akustischen Anzeige von Fahr- und/oder Betriebszuständen des Fahrzeuganhängers und zur Anzeige des Betriebszustands des Funk-Kommunikationssystems (27) ausgebildet ist.

3. Funk-Kommunikationssystem nach Anspruch 1 oder 2, **dadurch gekennzeichnet, dass** die Relais-Signalübertragungseinheit (30) aus einer mobilen Relais-Einheit besteht.

4. Funk-Kommunikationssystem nach einem der vorhergehenden Ansprüche, **dadurch gekennzeichnet, dass** der RF-Funksender (28) und die Relais-Signalübertragungseinheit (30) zum Senden bzw. Empfangen von RF-Funksignalen in einem Bereich zwischen 300 MHz und 1000 MHz ausgebildet sind.

5. Funk-Kommunikationssystem nach einem der vorhergehenden Ansprüche, **dadurch gekennzeichnet, dass** der RF-Funksender (28) und die Relais-Signalübertragungseinheit (30) zum Senden bzw. Empfangen von 433 MHz- oder 866 MHz-Funksignalen ausgebildet sind.

6. Funk-Kommunikationssystem nach einem der vorhergehenden Ansprüche, **dadurch gekennzeichnet, dass** die Bluetooth-Schnittstelle eine Bluetooth Low Energy (BLE) Schnittstelle ist.

7. Funk-Kommunikationssystem nach einem der vorhergehenden Ansprüche, **dadurch gekennzeichnet, dass** die Anzeigeeinheit (31) eine mobile Anzeigeeinheit in der Form eines Smartphones, Tablets oder Navigationsgeräts oder eine im Zugfahrzeug (29) fest installierte Anzeigeeineinrichtung ist.

8. Funk-Kommunikationssystem nach einem der vorhergehenden Ansprüche, **dadurch gekennzeichnet, dass** die Relais-Signalübertragungseinheit (30) im Zugfahrzeug (29) angeordnet oder anordenbar ist.

9. Funk-Kommunikationssystem nach einem der Ansprüche 1 bis 7, **dadurch gekennzeichnet, dass** die Relais-Signalübertragungseinheit (30) am Fahrzeuganhänger angeordnet oder anordenbar ist.

10. Stabilisierungssystem, insbesondere Schlingerbremssystem, für Fahrzeuganhänger, mit einer am Fahrzeuganhänger angeordneten Stabilisierungseinrichtung (16), wobei die Stabilisierungseinrichtung (16) aufweist:
- eine Sensoreinrichtung (25) zur Erfassung von kritischen Fahrzuständen des Fahrzeuganhängers und Abgabe entsprechender Sensorsignale,
- einen Aktor (19) zur Betätigung von Radbremsen (6) des Fahrzeuganhängers,
- eine elektronische Steuereinrichtung (26) zur Ansteuerung des Aktors (19) mittels Steuersignalen, die in Abhängigkeit der Sensorsignale erzeugt werden,
**dadurch gekennzeichnet, dass** das Stabilisierungssystem ein Funk-Kommunikationssystem (27) gemäß einem der vorhergehenden Ansprüche aufweist.

11. Stabilisierungssystem nach Anspruch 10, **dadurch gekennzeichnet, dass** die Stabilisierungseinrichtung (16) als kompakte Zentraleinheit (24) ausgebildet ist, die den Aktor (19) und die Steuereinrichtung (26) umfasst, wobei der RF-Funksender (28) innerhalb oder an der Zentraleinheit (24) angeordnet ist.

12. Stabilisierungssystem nach Anspruch 10 oder 11, **dadurch gekennzeichnet, dass** die Sensoreinrichtung (25) ausgebildet ist, den Reifendruck, die Temperatur, die Reifendrehzahl, die Fahrtrichtung, den Bremsbelagverschleiß, die Ladungsverteilung, Achslast, Stützlast während der Fahrt, Stützlast während des Beladens des Fahrzeuganhängers, die Geschwindigkeit, Beschleunigung und/ oder Gierrate des Fahrzeuganhängers zu erfassen und an die Steuereinrichtung (26) oder den RF-Funksender (28) weiterzuleiten.

13. Fahrzeuganhänger, **dadurch gekennzeichnet, dass** der Fahrzeuganhänger ein Funk-Kommunikationssystem gemäß einem der Ansprüche 1 bis 9 aufweist.

14. Fahrzeuganhänger, **dadurch gekennzeichnet, dass** der Fahrzeuganhänger ein Stabilisierungssystem gemäß einem der Ansprüche 10 bis 12 aufweist.
